(19) Europäisches Patentamt
European Patent Office
Office européen des brevets

(11) **EP 1 919 749 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **06793027.1**

(22) Anmeldetag: **28.08.2006**

(51) Int Cl.:
**B60T 8/40** (2006.01)     **B60T 8/42** (2006.01)

(86) Internationale Anmeldenummer:
**PCT/EP2006/065734**

(87) Internationale Veröffentlichungsnummer:
**WO 2007/025951 (08.03.2007 Gazette 2007/10)**

(54) **VERFAHREN ZUR BESTIMMUNG EINES VORDRUCKS IN EINER KRAFTFAHRZEUG-BREMSANLAGE**

METHOD FOR DETERMINING INITIAL PRESSURE IN A MOTOR VEHICLE BRAKING SYSTEM

PROCEDE POUR DETERMINER UNE PRESSION D'ALIMENTATION DANS UN SYSTEME DE FREINAGE DE VEHICULE AUTOMOBILE

(84) Benannte Vertragsstaaten:
**DE FR HU IT**

(30) Priorität: **01.09.2005 DE 102005041556**

(43) Veröffentlichungstag der Anmeldung:
**14.05.2008 Patentblatt 2008/20**

(73) Patentinhaber: **Continental Teves AG & Co. oHG**
**60488 Frankfurt (DE)**

(72) Erfinder:
• **ATTALLAH, Faouzi**
**64287 Darmstadt (DE)**
• **MAHLO, Rüdiger**
**12623 Berlin (DE)**
• **MAGEL, Guntjof**
**65428 Rüsselsheim (DE)**
• **KROH, Lukas**
**35510 Butzbach (DE)**
• **SIKORSKI, Frank**
**61381 Friedrichsdorf (DE)**
• **KOHL, Andreas**
**55126 Mainz (DE)**
• **MÜLLER, Jochen**
**35037 Marburg (DE)**

(56) Entgegenhaltungen:
WO-A-94/18041     WO-A-97/06038
WO-A-2005/007475     DE-A1- 3 819 490
DE-A1- 10 359 224     DE-A1- 19 946 777

EP 1 919 749 B1

**Beschreibung**

Die Erfindung betrifft ein Verfahren zur Bestimmung eines Vordrucks bei einer Kraftfahrzeug-Bremsanlage gemäß dem Oberbegriff des Anspruchs 1 sowie eine Druckregelvorrichtung zur Durchführung des Verfahrens gemäß dem Oberbegriff des Anspruchs 7.

Zum optimalen Einsatz von elektronischen Bremssystemen, insbesondere von Antiblockiersystemen (ABS) und Fahrstabilitätsregelungen (z.B. ESP), ist es vorteilhaft, die Ansteuerung der einem Radbremszylinder jeweils zugeordneten Ein- und Auslassventile unter Berücksichtigung des so genannten Vordrucks, d.h. des Drucks zwischen dem Hauptbremszylinder und dem Einlassventil, durchzuführen. Es ist möglich, diesen Druck mittels eines Drucksensors zu erfassen, wobei zu diesem Zweck einsetzbare Sensoren jedoch sehr teuer sind.

Aus der DE 199 46 777 A1 ist ein Verfahren bekannt, welches zur Abschätzung eines zwischen einem Hauptbremszylinder und einem Einlassventil eines Radbremszylinders einer Kraftfahrzeug-Bremsanlage herrschenden Vordrucks die Nachlaufspannung eines getaktet betriebenen Motors einer Pumpe, welche zur Rückförderung von Bremsflüssigkeit aus einer ausgangsseitig von dem Radbremszylinder angeordneten Speicherkammer in den Hauptbremszylinder verwendet wird, und den in der Speicherkammer ermittelten oder gemessenen Speicherkammerdruck verwendet. Eine Aussage über die Genauigkeit des abgeschätzten Druckwerts wird nicht gemacht.

Aufgabe der Erfindung ist es, ein Verfahren und eine Vorrichtung zur Verfügung zu stellen, mit dem der Vordruck genau und zuverlässig in einfacher Weise bestimmbar ist.

Diese Aufgabe wird erfindungsgemäß durch das Verfahren gemäß Anspruch 1 und die Vorrichtung gemäß Anspruch 7 gelöst.

Die Erfindung geht dabei von der Idee aus, dass verschiedene, unterschiedlich stark von dem zu bestimmenden Vordruck abhängige Kenngrößen des Spannungsverlaufs am getaktet, insbesondere durch Pulsweiten Modulation (PWM), betriebenen Motor der Rückförderpumpe bestimmt werden. Aus jeder dieser Größen wird unter Zugrundelegung eines funktionalen Zusammenhangs, insbesondere eines linearen Zusammenhangs, und mittels der Ergebnisse von Eichmessungen ein Vordruck bestimmt. Der Einfluss von Messfehlern, Ausreißern oder sonstigen kurzzeitigen Störungen in dem Spannungsverlauf wird erfindungsgemäß durch die Vielzahl der Kenngrößen, durch die Bewertung der gemessenen Größen, insbesondere anhand von weiteren Messdaten wie z.B. dem Füllstand eines Niederdruckspeichers, und durch die gezielte Filterung, Aufbereitung und Mittelung der Daten minimiert. So wird eine aussagekräftige, quantitative Aussage über den Vordruck möglich.

Durch Verwendung des erfindungsgemäßen Verfahrens kann auf den Einsatz von Drucksensoren verzichtet werden, wobei unter Berücksichtigung des erfindungsgemäß bestimmten Vordrucks eine Bremsregelung deutlich verbessert werden kann. Vorteilhafterweise kann der erfindungsgemäß bestimmte Vordruck auch zur Überprüfung der Funktionsfähigkeit eines vorhandenen Drucksensors verwendet werden. Im Fehlerfall des Drucksensors kann der sonst mit dem Drucksensor gemessene Vordruck durch den erfindungsgemäß bestimmten Vordruck ersetzt werden.

Das erfindungsgemäße Verfahren kann in elektronischen Bremssystemen für Kraftfahrzeuge oder in elektronischen Steuerungen zur Regelung der Fahrdynamik von Kraftfahrzeugen verwendet werden.

Weitere bevorzugte Ausführungsformen der Erfindung ergeben sich aus den Unteransprüchen und der nachfolgenden Beschreibung anhand von Figuren.

Es zeigen

Fig. 1     eine schematische Darstellung eines Fahrzeugbrems-systems mit lediglich einem dargestellten Radbremskreis und

Fig. 2     eine schematische Darstellung des Verlaufs der Motorspannung während eines An-Aus-An-Zyklus der Versorgungsspannung am Motor.

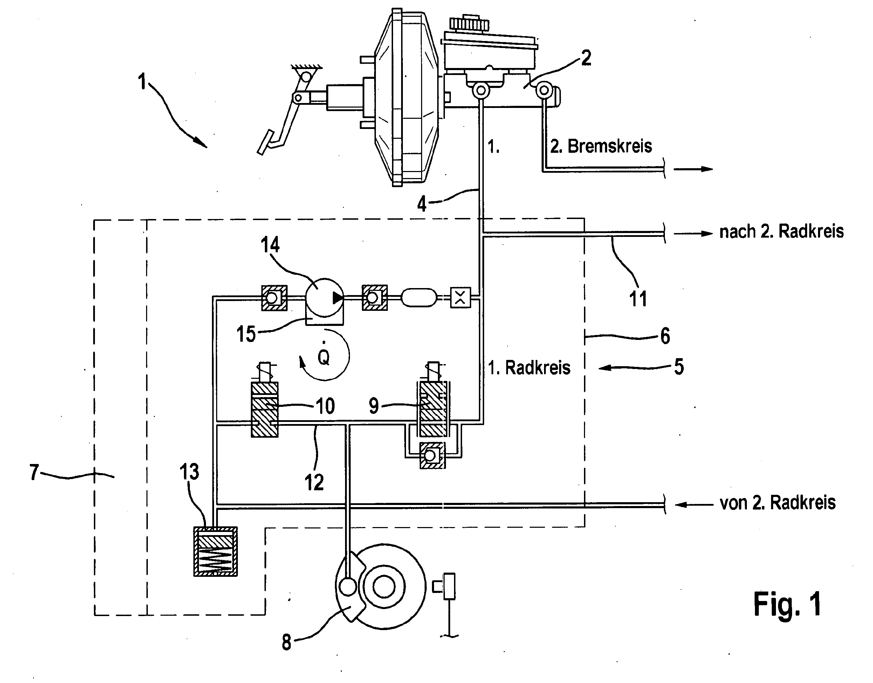

Aus der Fig. 1 geht exemplarisch ein Bremskreis einer schlupfgeregelten Kraftfahrzeugbremsanlage 1 hervor, wobei lediglich ein Radbremskreis dargestellt ist. Die Bremsanlage 1 umfasst ein Bremsgerät mit einem Hauptbremszylinder 2, welcher über eine hydraulische Verbindung 4 und eine Verteilvorrichtung 5, welche eine Hydraulikeinheit 6 und eine Elektronikeinheit 7 umfasst, mit einer Radbremse 8 verbunden ist. Die Hydraulikeinheit 6 verfügt über einen Aufnahmekörper für hydraulische und elektrohydraulische Bauelemente wie elektromagnetisch betätigbare Einlass- und Auslassventile 9,10 für jede Radbremse 8. In der Verbindung 4 - noch vor einem stromlos geöffneten Einlassventil 9 für die besagte Radbremse - befindet sich ein Abzweig 11 zu einem zweiten Radbremskreis. Ausgehend von der Radbremse 8 führt ein Rücklaufanschluss 12 über das stromlos geschlossene Auslassventil 10 zu einem Niederdruckspeicher 13, welcher ein, aus der Radbremse 8 infolge ABS-Regelzyklen abgelassenes Volumen von Hydraulikflüssigkeit aufzunehmen vermag. Der Niederdruckspeicher 13 speist eine Saugseite einer motorangetriebenen Pumpe 14. Diese ist vorzugsweise vom Typ Radialkolbenpumpe und verfügt über jeweils ein Saugventil auf der Saugseite und ein Druckventil auf der Druckseite. Motor 15 und Pumpe 14 sind vorzugsweise als Aggregat (Motor-Pumpen-Aggregat) ausgebildet und erlauben eine Rückförderung abgelassener Hydraulikflüssigkeit in Richtung Hauptbremszylinder 2. Es versteht sich, dass das Bremssystem zusätzliche Funktionalitäten wie beispielsweise eine Antriebsschlupfregelung (ASR) oder Fahrstabilitätsregelung (ESP) aufweisen kann, was ein dem Einlassventil 9 vorgeschaltetes, elektromagnetisch ansteuerbares und stromlos geöffnetes Trennventil erfordert.

Während einer ABS-Regelung stellt sich infolge von Druckabbauvorgängen über das Auslassventil 10 eine Druckdifferenz am Einlassventil 9 ein. Das aus der Radbremse 8 entwichene Volumen gelangt in den Niederdruckspeicher 13. Gleichzeitig wird die Pumpe 14 aktiviert und fördert das abgelassene Volumen - gegen den anliegenden Vordruck - wieder zurück in Richtung Hauptbremszylinder 2 und vor das Einlassventil 9.

Der elektrische Motor 15 der Pumpe 14 basiert grundsätzlich auf einer fremderregten Gleichstrommaschine, insbesondere einer permanentmagneterregten Kommutatormaschine, deren Geschwindigkeit über eine Pulsweitenmodulation (PWM) einer konstanten Versorgungsspannung gesteuert wird. Dabei ist eine vorgegebene Anzahl von Geschwindigkeitsstufen (beispielsweise 1-12) möglich. Zur Drehzahlsteuerung wird innerhalb eines festen Intervalls (ein PWM-Zyklus, beispielsweise t = 60ms) die Dauer der Ein- und der Ausschaltphase der am Motor anliegenden Versorgungsspannung moduliert. Eine Vollaussteuerung des Motors (Geschwindigkeitsstufe 12) entspricht einer anliegenden Versorgungsspannung (Einschaltphase) über das gesamte vorgenannte Intervall. Bei geringerer Aussteuerung wird die Versorgungsspannung des Motors nach einer gewissen Zeit abgeschaltet (beispielsweise für Geschwindigkeitsstufe 8 nach 40ms), bleibt für den Rest des PMW-Zyklus (beispielsweise für Geschwindigkeitsstufe 8 20ms) ausgeschaltet (Ausschaltphase) und wird erst wieder mit Beginn der Einschaltphase des nächsten PWM-Zyklus eingeschaltet.

Mit abnehmender Aussteuerung (Geschwindigkeitsstufe) nimmt die Pulsweite der Einschaltphase (Versorgungsspannung am Motor an) ab und die Pulsweite der Ausschaltphase (Versorgungsspannung am Motor aus) zu.

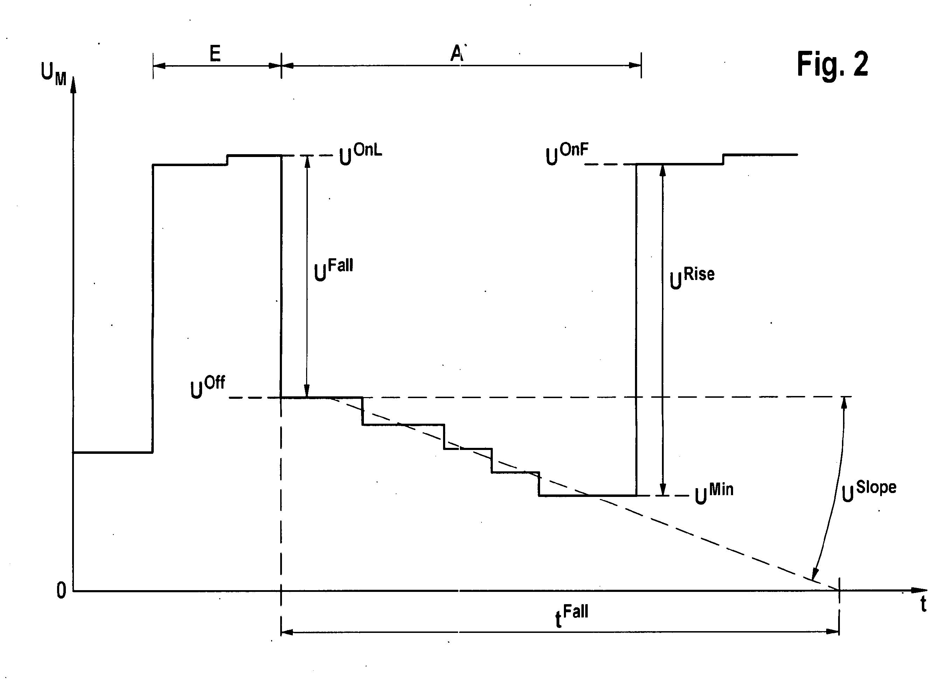

In Fig. 2 ist der Spannungsverlauf am Motor während eines An-Aus-An-Zyklus der Versorgungsspannung des Motors schematisch abgebildet. In der PWM-Einschaltphase E entspricht die Motorspannung etwa der maximal verfügbaren Versorgungsspannung. Während der PWM-Ausschaltphase A wirkt der Motor 15 als Generator und es kann eine Generatorspannung abgegriffen werden. In Fig. 2 sind einige, für das beispielsgemäße Verfahren relevante Kenngrößen des Spannungsverlaufs einge zeichnet: der letzte Spannungswert bei noch eingeschalteter Versorgungsspannung $U^{OnL}$, der erste Spannungswert bei wieder eingeschalteter Versorgungsspannung $U^{OnF}$, der erste Spannungswert nach ausgeschalteter Versorgungsspannung $U^{Off}$, die Differenz zwischen dem letzten Spannungswert bei noch eingeschalteter Versorgungsspannung und dem ersten Spannungswert nach ausgeschalteter Versorgungsspannung $U^{Fall}$, der niedrigste erreichte Spannungswert bei ausgeschalteter Versorgungsspannung $U^{Min}$, die Summe der Spannungswerte bei ausgeschalteter Versorgungsspannung, die Steigung des Spannungsabfalls bei ausgeschalteter Versorgungsspannung $U^{Slope}$, die Differenz zwischen dem niedrigsten erreichten Spannungswert bei ausgeschalteter Versorgungsspannung und dem ersten Spannungswert bei wieder eingeschalteter Versorgungsspannung $U^{Rise}$, Zeit $t^{Fall}$, bis die Spannung auf Null absinkt.

Jede dieser Kenngrößen des Spannungsverlaufs kann bei Zugrundelegung eines funktionalen Zusammenhangs und der Ergebnisse von Eichmessungen zur Bestimmung eines Wertes für den Vordruck verwendet werden. Um eine möglichst schnelle, einfach zu kontrollierende und zu überwachende Auswertung im Prozessor des elektronischen Bremssystems durchführen zu können, wird beispielsgemäß ein einfacher, linearer Zusammenhang zwischen einer Kenngröße U und dem Vordruck P gewählt:

$$P = P_0 + P_1 \times U$$

Dabei ist U eine der oben beispielsgemäß beschriebenen Kenngrößen des Spannungsverlaufs des Motors. Die Parameter $P_0$ und $P_1$ für jede Kenngröße können aus Eichmessungen gewonnen werden.

Zur Bestimmung eines Wertes für den Vordruck, welcher möglichst wenig von Messfehlern, Ausreißern oder sonstigen kurzzeitigen Störungen in dem Spannungsverlauf beeinflusst ist, werden beispielsgemäß die folgenden Maßnahmen durchgeführt, es ist jedoch auch im Sinne der Erfindung, wenn nur eine oder ein Teil der Maßnahmen durchgeführt werden.

Es wird eine Bewertung der Qualität und/oder Zuverlässigkeit der gemessenen Kenngrößen, d.h. des Spannungsverlaufs am Pumpenmotor, durchgeführt. Darauf basierend wird dann gegebenenfalls eine Filterung und/oder Aufbereitung der Daten vorgenommen. Störungen im Spannungsverlauf treten bevorzugt dann auf, wenn einer oder beide Niederdruckspeicher im Bremskreis leer ist/sind oder wenn die Pumpe sich zwischen zwei Geschwindigkeitsstufen befindet. Ist der Spannungsverlauf ungestört und liegt keiner der beiden genannten Fälle vor, sind die Kenngrößen zuverlässig und es wird aus ihnen je ein Wert für den Vordruck mittels des linearen Zusammenhangs bestimmt. Treten Störungen im Signal auf und/oder liegt einer der beiden genannten Fälle vor, werden die Kenngrößen als unzuverlässig eingestuft. Es ist dann die einfachste Möglichkeit, den zuletzt zuverlässig bestimmten Wert des Vordrucks so lange beizubehalten, wie die Kenngrößen unzuverlässig sind. Im Fall von ein oder zwei leeren Niederdruckspeichern ist es auch vorteilhaft, die Kenngrößen, obwohl sie als unzuverlässig eingestuft sind, zur Bestimmung eines Vordrucks heranzuziehen. Bevorzugt wird im Fall von ein oder zwei leeren Niederdruckspeichern eine Mittelung der Ergebnisse aus den beiden Vorgehensweisen vorgenommen, d.h. der zuletzt zuverlässig bestimmte Wert des Vordrucks und der aus den unzuverlässig eingestuften Kenngrößen bestimmte Wert des Vordrucks werden gemittelt.

Die aus den verschiedenen Kenngrößen pro PWM-Zyklus bestimmten Vordruckwerte werden gemittelt, um den letztendlichen Vordruck zu erhalten. Da, wenn keine Mess- oder Auswertefehler vorliegen, die aus den verschiedenen Kenngrößen bestimmten Vordrucke annähernd gleich sein sollten, werden zur Elimination von Ausreißern bei der Mittelung von mehr als zwei Druckwerten bevorzugt nur Druckwerte von ähnlicher Größe berücksichtigt (Mittelung ohne Extremwerte).

Diese Mittelung kann jeweils am Ende des PWM-Zyklus, wenn alle Kenngrößen verfügbar sind, vorgenommen werden, d.h. einmal pro PWM-Zyklus. Vorzugsweise wird eine Mittelung zweimal pro PWM-Zyklus vorgenommen, da zu einem früheren Zeitpunkt während des PWM-Zyklus die Kenngrößen $U^{OnL}$, $U^{Off}$ und $U^{Fall}$ vorhanden sind, während die anderen Kenngrößen erst am Ende des PWM-Zyklus verfügbar sind.

Zur Dämpfung von Fluktuationen ist es außerdem bevorzugt, eine weitere, zeitliche Mittelung durchzuführen, d.h. der nächste Vordruckswert $P_i'$ ergibt sich durch Mittelung des zuletzt bestimmten Vordrucks $P_{i-1}$ mit dem aktuell ausgewerteten Vordruck $P_i$: $P_i'=(P_{i-1} + P_i)/2$

**Patentansprüche**

1. Verfahren zur Bestimmung eines zwischen einem Hauptbremszylinder (2) und einem Einlassventil (9) eines Radbremszylinders einer Kraftfahrzeug-Bremsanlage (1) herrschenden Vordrucks, welches den Vordruck unter Berücksichtigung des Verlaufs einer Nachlaufspannung eines getaktet betriebenen Motors (15) einer Pumpe (14), welche zur Rückförderung von Bremsflüssigkeit aus einem Niederdruckspeicher (13) in den Hauptbremszylinder (2) verwendet wird, bestimmt, wobei mehrere Kenngrößen ($U^{Onl}$, $U^{OnF}$, $U^{Off}$, $U^{Fall}$, $U^{Min}$, $U^{Slpoe}$, $U^{Rise}$ und/ oder $t^{Fall}$) des Spannungsverlaufs gemessen und jeweils zur Bestimmung eines Vordruckwertes herangezogen werden, **dadurch gekennzeichnet, dass** für jede Kenngröße ($U^{Onl}$, $U^{OnF}$, $U^{Off}$, $U^{Fall}$, $U^{Min}$, $U^{Slopoe}$, $U^{Rise}$ und/oder $t^{Fall}$) des Spannungsverlaufs ein linearer Zusammenhang zwischen Kenngröße ($U^{Onl}$, $U^{OnF}$, $U^{Off}$, $U^{Fall}$, $U^{Min}$, $U^{Slope}$, $U^{Rise}$ und/oder $t^{Fall}$) und Vordruck angenommen wird, dessen zwei Parameter aus Eichmessungen gewonnen werden und dass ein oder mehrere, insbesondere alle, der folgenden Schritte durchgeführt werden:

- Bewertung der Qualität und/oder Zuverlässigkeit der gemessenen Kenngrößen ($U^{Onl}$, $U^{OnF}$, $U^{Off}$, $U^{Fall}$, $U^{Min}$, $U^{Sl-poe}$ $U^{Rise}$ und/oder $t^{Fall}$),
- Filterung und/oder Aufbereitung der Kenngrößen ($U^{Onl}$, $U^{OnF}$, $U^{Off}$, $U^{Fall}$, $U^{Min}$, $U^{Slpoe}$, $U^{Rise}$ und/oder $t^{Fall}$) und/ oder der daraus bestimmten Vordruckwerte bei mangelnder Qualität und/ oder Zuverlässigkeit der gemessenen Kenngrößen ($U^{Onl}$, $U^{OnF}$, $U^{Off}$, $U^{Fall}$, $U^{Min}$, $U^{Sl-poe}$, $U^{Rise}$ und/oder $t^{Fall}$),
- Mittelung der aus den verschiedenen Kenngrößen ($U^{Onl}$, $U^{OnF}$, $U^{Off}$, $U^{Fall}$, $U^{Min}$, $U^{Slpoe}$, $U^{Rise}$ und/oder $t^{Fall}$) bestimmten Vordruckwerte, wobei nur Druckwerte von ähnlicher Größe berücksichtigt werden, und
- zeitliche Mittelung der Vordruckwerte zur Dämpfung von Fluktuationen

2. Verfahren nach Anspruch 1, **dadurch gekennzeichnet, dass** die verwendeten Kenngrößen ($U^{Onl}$, $U^{OnF}$, $U^{Off}$, $U^{Fall}$, $U^{Min}$, $U^{Sl-poe}$, $U^{Rise}$ und/oder $t^{Fall}$) des Spannungsverlaufs während eines An-Aus-An-Zykluses der Versorgungsspannung am Motor zwei oder mehrere der folgenden Größen umfassen: letzter Spannungswert bei noch eingeschalteter Versorgungsspannung $U^{OnL}$, erster Spannungswert bei wieder eingeschalteter Versorgungsspannung $U^{OnF}$, erster Spannungswert nach ausgeschalteter Versorgungsspannung $U^{Off}$, Differenz zwischen dem letzten Spannungswert bei noch eingeschalteter Versorgungsspannung und dem ersten Spannungswert nach ausgeschalteter Versorgungsspannung $U^{Fall}$, niedrigster erreichter Spannungswert bei ausgeschalteter Versorgungsspannung $U^{Min}$, Summe der Spannungswerte bei ausgeschalteter Versorgungsspannung, Steigung des Spannungsabfalls bei ausgeschalteter Versorgungsspannung $U^{Slope}$, Differenz zwischen dem niedrigsten erreichten Spannungswert bei ausgeschalteter Versorgungsspannung und dem ersten Spannungswert bei wieder eingeschalteter Versorgungsspannung $U^{Rise}$, Zeit $t^{Fall}$, bis die Spannung auf Null absinkt.

3. Verfahren nach Anspruch 1 bis 2, **dadurch gekennzeichnet, dass** zur Bewertung der Qualität und/oder Zuverlässigkeit der gemessenen Kenngrößen ($U^{Onl}$, $U^{OnF}$, $U^{Off}$, $U^{Fall}$, $U^{Min}$, $U^{Sl-poe}$, $U^{Rise}$ und/oder $t^{Fall}$) der Füllzustand leer/nicht leer mindestens eines, insbesondere zweier, Niederdruckspeicher(s) (13) herangezogen wird.

4. Verfahren nach Anspruch 1 bis 3, **dadurch gekennzeichnet, dass** bei mangelnder Qualität und/oder Zuverlässigkeit der gemessenen Kenngrößen ($U^{Onl}$, $U^{OnF}$, $U^{Off}$, $U^{Fall}$, $U^{Min}$, $U^{Sl-poe}$, $U^{Rise}$ und/oder $t^{Fall}$) kein Vordruckwert aus den Kenngrößen ($U^{Onl}$, $U^{OnF}$, $U^{Off}$, $U^{Fall}$, $U^{Min}$, $U^{Slpoe}$, $U^{Rise}$ und/oder $t^{Fall}$) bestimmt wird, sondern der zuletzt zuverlässig bestimmte Vordruckwert beibehalten wird.

5. Verfahren nach Anspruch 1 bis 3, **dadurch gekenn-**

**zeichnet, dass** trotz mangelnder Qualität und/oder Zuverlässigkeit der gemessenen Kenngrößen ($U^{Onl}$, $U^{OnF}$, $U^{Off}$, $U^{Fall}$, $U^{Min}$, $U^{Sl-poe}$, $U^{Rise}$ und/oder $t^{Fall}$) ein Vordruckwert aus den Kenngrö-βen ($U^{Onl}$, $U^{OnF}$, $U^{Off}$, $U^{Fall}$, $U^{Min}$, $U^{Slpoe}$, $U^{Rise}$ und/oder $t^{Fall}$) bestimmt wird.

6. Verfahren nach Anspruch 1 bis 3, **dadurch gekennzeichnet, dass** eine Mittelung der nach den Verfahren nach Anspruch 5 und 6 bestimmten Vordruckwerte durchgeführt wird.

7. Elektrohydraulische Druckregelvorrichtung, insbesondere in einem elektronischen Kraftfahrzeugbremssystem, umfassend mindestens einen Hauptbremszylinder (2), mindestens eine von einem Elektromotor (15) betriebene Pumpe (14), mindestens einen Radbremszylinder, mindestens einen, insbesondere zwei, Niederdruckspeicher (13), mindestens eine Elektronikeinheit (7), mindestens jeweils ein Ein-(9) und Auslassventil (10) und zugehörige Hydraulikleitungen, **dadurch gekennzeichnet, dass** in der mindestens einen Elektronikeinheit (7) ein Verfahren gemäß den Ansprüchen 1, 2, 3, 4 und 7 und gemäß einem der Ansprüche 5 oder 6 durchgeführt wird.

8. Druckregelvorrichtung nach Anspruch 7, **dadurch gekennzeichnet, dass** in der mindestens einen Elektronikeinheit (7) der bestimmte Vordruck als Regelgröße zur Regelung von Bremseingriffen und/oder als Vergleichswert zur Überprüfung der Funktionsfähigkeit eines Drucksensors verwendet wird.

**Claims**

1. Method for determining an initial pressure between a master brake cylinder (2) and an inlet valve (9) of a wheel brake cylinder of a motor vehicle brake system (1), which determines the initial pressure by taking into account the profile of a run-on voltage of a cyclically operated motor (15) of a pump (14) which is used to feed back brake fluid from a low pressure accumulator (13) into the master brake cylinder (2), wherein a plurality of characteristic variables ($U^{Onl}$, $U^{OnF}$, $U^{Off}$, $U^{Fall}$, $U^{Min}$, $U^{Slope}$, $U^{Rise}$ and/or $t^{Fall}$) of the voltage profile are measured and are each used to determine an initial pressure value, **characterized in that** a linear relationship between the characteristic variable ($U^{Onl}$, $U^{OnF}$, $U^{Off}$, $U^{Fall}$, $U^{Min}$, $U^{Slope}$ $U^{Rise}$ and/or $t^{Fall}$) and the initial pressure is assumed for each characteristic variable ($U^{Onl}$, $U^{OnF}$, $U^{Off}$, $U^{Fall}$, $U^{Min}$, $U^{Slope}$, $U^{Rise}$ and/or $t^{Fall}$) of the voltage profile, the two parameters of which are acquired from calibration measurements, and **in that** one or more of the following steps, in particular all of said steps, are carried out:

- evaluation of the quality and/or reliability of the measured characteristic variables ($U^{Onl}$, $U^{ONF}$, $U^{Off}$, $U^{Fall}$, $U^{Min}$, $U^{Slope}$, $U^{Rise}$ and/or $t^{Fall}$),
- filtering and/or preparation of the characteristic variables ($U^{Onl}$, $U^{OnF}$, $U^{Off}$, $U^{Fall}$ $U^{Min}$, $U^{Slope}$ $U^{Rise}$ and/or $t^{Fall}$) and/or of the initial pressure values determined therefrom given a lack of quality and/or reliability of the measured characteristic variables ($U^{Onl}$, $U^{OnF}$, $U^{Off}$, $U^{Fall}$, $U^{Min}$, $U^{Slope}$, $U^{Rise}$ and/or $t^{Fall}$),
- averaging of the initial pressure values determined from the various characteristic variables ($U^{Onl}$, $U^{OnF}$, $U^{Off}$, $U^{Fall}$, $U^{Min}$, $U^{Slope}$, $U^{Rise}$ and/or $t^{Fall}$), wherein only pressure values of a similar magnitude are taken into account, and
- chronological averaging of the initial pressure values in order to dampen fluctuations.

2. Method according to Claim 1, **characterized in that** the characteristic variables ($U^{Onl}$, $U^{OnF}$, $U^{Off}$, $U^{Fall}$, $U^{Min}$, $U^{Slope}$, $U^{Rise}$ and/or $t^{Fall}$) which are used of the voltage profile during an on-off-on cycle of the supply voltage at the motor comprise two or more of the following variables: the last voltage value when the supply voltage $U^{ONL}$ is switched on, the first voltage value when the supply voltage $U^{ONF}$ is switched on again, the first voltage value after the supply voltage $U^{Off}$ is switched off, the difference between the last voltage value when the supply voltage is switched on and the first voltage value after the supply voltage $U^{Fall}$ has been switched off, the lowest voltage value reached when the supply voltage $U^{Min}$ is switched off, the sum of the voltage values when the supply voltage is switched off, the gradient of the voltage drop when the supply voltage $U^{Slope}$ is switched off, the difference between the lowest voltage value reached when the supply voltage is switched off and the first voltage value when the supply voltage $U^{Rise}$, time $t^{Fall}$ is switched on again until the voltage drops to zero.

3. Method according to Claims 1 and 2, **characterized in that** the filling level empty/not empty of at least one, in particular of two, low pressure accumulators (13) is used to assess the quality and/or reliability of the characteristic variables ($U^{Onl}$, $U^{OnF}$ $U^{Off}$, $U^{Fall}$, $U^{Min}$, $U^{Slope}$, $U^{Rise}$ and/or $t^{Fall}$) measured.

4. Method according to Claims 1 to 3, **characterized in that** given a lack of quality and/or reliability of the measured characteristic variables ($U^{Onl}$, $U^{OnF}$, $U^{Off}$, $U^{Fall}$, $U^{Min}$, $U^{Slope}$, $U^{Rise}$ and/or $t^{Fall}$) an initial pressure value is not determined from the characteristic variables ($U^{Onl}$, $U^{OnF}$, $U^{Off}$, $U^{Fall}$, $U^{Min}$, $U^{Slope}$, $U^{Rise}$ and/or $t^{Fall}$) but instead the last initial pressure value to have been determined reliably is retained.

5. Method according to Claims 1 to 3, **characterized**

**in that** despite a lack of quality and/or reliability of the measured characteristic variables ($U^{OnI}$, $U^{OnF}$, $U^{Off}$, $U^{Fall}$, $U^{Min}$, $U^{Slope}$, $U^{Rise}$ and/or $t^{Fall}$) an initial pressure value is determined from the characteristic variables ($U^{OnI}$, $U^{OnF}$, $U^{Off}$, $U^{Fall}$, $U^{Min}$, $U^{Slope}$, $U^{Rise}$ and/or $t^{Fall}$).

6. Method according to Claims 1 to 3, **characterized in that** averaging of the initial pressure values which are determined according to the methods according to Claims 5 and 6 is carried out.

7. Electrohydraulic pressure control device, in particular in an electronic motor vehicle brake system, comprising at least one master brake cylinder (2), at least one pump (14) which is operated by an electric motor (15), at least one wheel brake cylinder, at least one, in particular two, low pressure accumulators (13), at least one electronic unit (7), in each case at least one inlet valve (9) and one outlet valve (10) and associated hydraulic lines, **characterized in that** a method according to Claims 1, 2, 3, 4 and 7 and according to one of Claims 5 and 6 is carried out in the at least one electronic unit (7).

8. Pressure control device according to Claim 7, **characterized in that** the specific initial pressure is used in the at least one electronic unit (7) as a control variable for controlling braking interventions and/or as a comparison value for checking the functional capability of a pressure sensor.

**Revendications**

1. Procédé pour déterminer une pression d'alimentation qui règne entre un maître cylindre de frein (2) et une vanne d'entrée (9) d'un cylindre de frein de roue d'un équipement de freinage de véhicule automobile (1), lequel détermine la pression d'alimentation en tenant compte du tracé d'une tension d'inertie d'un moteur (15) à fonctionnement cyclique d'une pompe (14), laquelle est utilisée pour le retour du liquide de frein depuis un accumulateur à basse pression (13) dans le maître cylindre de frein (2), plusieurs grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) du tracé de la tension étant mesurées et à chaque fois utilisées pour la détermination d'une valeur de la pression d'alimentation, **caractérisé en ce que** pour chaque grandeur caractéristique ($U^{OnL}$, $U^{OnF}$, $U^{Off}$, $U^{Fall}$, $U^{Min}$, $U^{Slope}$, $U^{Rise}$ et/ou $t^{Fall}$) du tracé de la tension, une relation linéaire est supposée entre la grandeur caractéristique ($U^{OnL}$, $U^{OnF}$, $U^{Off}$, $U^{Fall}$, $U^{Min}$, $U^{Slope}$, $U^{Rise}$ et/ou $t^{Fall}$) et la pression d'alimentation, dont les deux paramètres sont obtenus à partir de mesures d'étalonnage et **en ce qu'**une ou plusieurs, notamment la totalité, des étapes suivantes sont exécutées :

- évaluation de la qualité et/ou de la fiabilité des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) mesurées,
- filtrage et/ou conditionnement des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) et/ou des valeurs de la pression d'alimentation déterminées à partir de celles-ci en cas de qualité et/ou de fiabilité insuffisante des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) mesurées,
- calcul de la moyenne des valeurs de la pression d'alimentation déterminées à partir des différentes grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$), seules étant prises en compte des valeurs de la pression de niveaux similaires, et
- calcul de la moyenne dans le temps des valeurs de la pression d'alimentation pour atténuer les fluctuations.

2. Procédé selon la revendication 1, **caractérisé en ce que** les grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) utilisées du tracé de la tension pendant un cycle marche-arrêt-marche de la tension d'alimentation aux bornes du moteur comprennent deux ou plusieurs des grandeurs suivantes : dernière valeur de la tension lorsque la tension d'alimentation est encore en circuit $U^{OnL}$, première valeur de la tension lors du rétablissement de la tension d'alimentation $U^{OnF}$, première valeur de la tension après la mise hors circuit de la tension d'alimentation $U^{Off}$, différence entre la dernière valeur de la tension lorsque la tension d'alimentation est encore en circuit et la première valeur de la tension après la mise hors circuit de la tension d'alimentation $U^{Fall}$, plus petite valeur de la tension atteinte lorsque la tension d'alimentation est mise hors circuit $U^{Min}$, somme des valeurs de la tension lorsque la tension d'alimentation est mise hors circuit, pente de la chute de tension lorsque la tension d'alimentation est mise hors circuit $U^{Slope}$, différence entre la plus petite valeur de la tension atteinte lorsque la tension d'alimentation est mise hors circuit et la première valeur de la tension lors du rétablissement de la tension d'alimentation $U^{Rise}$, temps $t^{Fall}$ jusqu'à ce que la tension chute à zéro.

3. Procédé selon les revendications 1 et 2, **caractérisé en ce que** le niveau de remplissage vide/non vide d'au moins un, notamment de deux accumulateurs à basse pression (13) est utilisé pour évaluer la qualité et/ou la fiabilité des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) mesurées.

4. Procédé selon les revendications 1 à 3, **caractérisé en ce qu'**en cas de qualité et/ou de fiabilité insuffisante des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) mesurées, aucune valeur de la pression d'alimentation n'est déterminée à partir des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$), mais la dernière valeur de la pression d'alimentation déterminée fiable est conservée.

5. Procédé selon les revendications 1 à 3, **caractérisé en ce que** malgré une qualité et/ou une fiabilité insuffisante des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$) mesurées, une valeur de la pression d'alimentation est déterminée à partir des grandeurs caractéristiques ($U^{OnL}$, $U^{OnF}$, $U^{Off}$, $U^{Fall}$, $U^{Min}$, $U^{Slope}$, $U^{Rise}$ et/ou $t^{Fall}$).

6. Procédé selon les revendications 1 à 3, **caractérisé en ce qu'**un calcul de la moyenne des valeurs de la pression d'alimentation déterminées est effectué conformément au procédé selon les revendications 5 et 6.

7. Dispositif électrohydraulique de régulation de la pression, notamment dans un système électronique de freinage de véhicule automobile, comprenant au moins un maître cylindre de frein (2), au moins une pompe (14) entraînée par un moteur électrique (15), au moins un cylindre de frein de roue, au moins un, notamment deux accumulateurs à basse pression (13), au moins une unité électronique (7), au moins une vanne respectivement d'entrée (9) et de sortie (10) et les conduites hydrauliques associées, **caractérisé en ce qu'**un procédé selon les revendications 1, 2, 3, 4 et 7 et selon l'une des revendications 5 ou 6 est mis en oeuvre dans l'au moins une unité électronique (7).

8. Dispositif de régulation de la pression selon la revendication 7, **caractérisé en ce que** la pression d'alimentation déterminée est utilisée dans l'au moins une unité électronique (7) comme grandeur de régulation pour réguler les interventions de freinage et/ou comme valeur comparative pour vérifier l'aptitude fonctionnelle d'un capteur de pression.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946777 A1